# EUROPEAN PATENT SPECIFICATION

(11) **EP 3 592 917 B1**
(45) Date of publication and mention of the grant of the patent: **10.03.2021**
(21) Application number: 18702151.4
(22) Date of filing: 18.01.2018
(51) Int. Cl.: E04D 13/076, A01B 1/20

(54) **GUTTER CLEANER**
RINNENREINIGER
APPAREIL DE NETTOYAGE DE GOUTTIÈRES

(30) Priority: 08.03.2017 DE 102017002131
(43) Date of publication of application: 15.01.2020
(73) Proprietor: Husqvarna AB, 561 82 Huskvarna (SE)
(72) Inventor: SAUTER, Thomas, 89150 Laichingen (DE); SCHERER, Gabriele, 89197 Weidenstetten (DE); ASAL, Benjamin, 89155 Ersingen (DE)
(74) Representative: Finkele, Rolf
(86) International application number: PCT/EP2018/051234
(87) International publication number: WO 2018/162131

(56) References cited:
- CN-Y- 201 409 279
- DE-U1- 8 810 974
- GB-A- 2 488 621
- US-A- 1 610 657
- US-A- 2 910 711
- US-A- 3 023 971
- US-A- 3 740 787
- US-A- 5 988 715
- US-A1- 2003 051 305
- US-A1- 2012 030 889

## Description

The present invention relates generally to the field of gutter cleaners. More specifically, the present document discloses an apparatus for cleaning gutters with multiple cleaning portions.

### BACKGROUND OF THE INVENTION

Gutter cleaners for cleaning roof gutters are known. Gutter cleaners comprise a main body with a cleaning portion. Said cleaning portion is adapted to be provided in the gutter during gutter cleaning. By moving the gutter cleaner along the gutter, dirt accumulated in the gutter can be removed. Gutter cleaners may comprise a handle for enabling a cleaning of a gutter arranged in a certain height by a user standing on the ground
DE 88 10 974 U discloses such a gutter cleaner.

Disadvantageously, known gutter cleaners are limited with respect to their field of application, respectively, with respect to their usability.

### SUMMARY OF THE INVENTION

It is an objective of the embodiments of the present invention to provide an apparatus for cleaning gutters (in the following also referred to as gutter cleaner) which allows an improved usability and an extended field of application. The objectives are solved by the features of the independent claim. Preferred embodiments are given in the dependent claims. If not explicitly indicated otherwise, embodiments of the invention can be freely combined with each other, as long as they are covered by the claims.

According to an aspect, the invention relates to an apparatus for cleaning gutters. The apparatus comprises the features of claim 1.

Said gutter cleaner is advantageous because due to the above-mentioned arrangement of the first and second cleaning portions, an improved usage of cleaning tools arranged at two sides, in particular opposite sides, of the apparatus is possible.

The cleaning apparatus comprises a handle or a handle fixing portion for fixing a handle. The handle or handle fixing portion can be or is connected with the handling portion of the main body.

At least one of the cleaning tools may be or comprise a brush or a brush-like cleaning tool, in particular to remove small particles of dirt, and at least one of the cleaning tools may be or comprise a fork-like or rake-like shape in particular including multiple teeth, in particular to remove larger dirt like leafs, tree branches, moss etc.

Various embodiments may be chosen for the angles and arrangements between the various components of the apparatus.

The longitudinal axis of the first arm portion and the longitudinal axis of the first cleaning portion may confine an inclination angle between 90° and 180°, preferably between 120° and 150°, wherein said inclination angle preferably opens towards the handling portion of the main body.

According to the invention, the first cleaning portion or the first cleaning tool is arranged in an angled manner under a first tool angle with respect to the handle or handle fixing portion and the second cleaning portion or the second cleaning tool is arranged in an angled manner under a second tool angle with respect to said handle or handle fixing portion. The first tool angle is at least approximately, meaning within a tolerance of at most ± 5°, equal to the second tool angle.

The inclination angle between the longitudinal axis of the first arm portion and the longitudinal axis of the first cleaning portion is in one embodiment at least approximately equal to the sum of the first tool angle and the second tool angle.

In such embodiments a change of the two cleaning tools or usage is possible by a mere rotation (e.g. rotation by 180° or essentially 180°) around a rotational axis of the apparatus, in particular the handle, without changing the inclination of the apparatus and the tools may be entered into the gutter at at least approximately the same inclination.

According to embodiments, the gutter cleaner comprises adjusting means (or: adjusting device) for adjusting the angle of inclination of the main body, specifically the first and second arm portions with respect to a handle or a handle fixing portion. Thereby the tilt of a cleaning head comprising the arm portions and the cleaning portions and also including the cleaning tools can be chosen according to the specific requirements.

According to embodiments, said adjusting means are formed by a hinge. Said hinge may comprise a single hinge axis or multiple hinge axes, said hinge axes being arranged in different spatial directions.

According to embodiments, the longitudinal axes of the first arm portion and the second arm portion coincide or are parallel to each other. Thus, the main body may comprise a T-like shape with arm portions protruding at opposite sides of the handling portion.

According to embodiments, the first cleaning portion and the handling portion protrude downwardly at the same side of the main body. Thereby it is possible to insert the first cleaning portion into the gutter in a slanted top-down arrangement, wherein the handling portion, respectively a handle coupled with the handling portion protrudes downwardly towards a user standing on the ground and handling the gutter cleaner.

According to embodiments, the first and second planes confine an acute angle which opens to a side opposite to the handling portion. In particular, the second cleaning tool protrudes out of the first plane thereby enabling an improved usage of the second cleaning portion and the further cleaning tool arranged at said second cleaning portion.

According to the invention, the angle between the longitudinal axis of the first arm portion and the longitudinal axis of the handle or handle fixing portion is greater than 90° and the angle between the longitudinal axis of the second arm portion and the longitudinal axis of the handle or handle fixing portion is smaller than 90°. Thereby, an appropriate inclination of the main body for using cleaning tools provided at the first and second cleaning portions can be obtained.

According to embodiments, said adjusting means comprise a locking mechanism, specifically a quick-locking-mechanism adapted to enable an angular adjustment of the main body with respect to the handle or handle fixing portion in a released state and a fixing of a certain angular position of the main body with respect to the handle or handle fixing portion in a fixed state. Thereby it is possible to choose an appropriate tilt of the main body and secure the main body in said chosen angular position.

According to a further embodiment of the apparatus for cleaning gutters, the first cleaning portion comprises at least a first and a second cleaning tool and the first cleaning tool is movably, in particular in a translational movement along the longitudinal axis, mounted at the first cleaning portion in order to be arranged at least in a first and a second position, wherein in said first position the first cleaning tool is in an active position and in said second position the first cleaning tool is in an idle position. Thereby it is possible to adapt the first cleaning portion to different cleaning tasks.

According to embodiments, the first cleaning tool is a brush or a brush-like cleaning tool.

According to embodiments, a further cleaning tool provided at the second cleaning portion comprises a fork-like or rake-like shape including multiple teeth.

According to embodiments, the main body comprises liquid guiding means, wherein said liquid guiding means are adapted to provide liquid in the area of the first and/or the second cleaning portion. Thereby, the mechanical cleaning effect achieved by the cleaning tools arranged at the first and second cleaning portions can be supported by liquid sprayed on the area to be cleaned.

According to embodiments, the liquid guiding means are included in the main body, specifically included in the arm portions and cleaning portions of the main body. Thereby, an improved guiding of liquid towards the first or the second cleaning portion is obtained and the risk of getting stuck with the liquid guiding means at a protrusion of the gutter is reduced.

According to embodiments, said liquid guiding means comprise liquid channels which are integrally formed within said main body, specifically integrally formed within the arm portions and cleaning portions of the main body. Thereby, an improved integration of the liquid guiding means is obtained.

According to embodiments, said liquid guiding means comprise at least two liquid nozzles, wherein at least one of said liquid nozzles is arranged in the area of the first and second cleaning portion in order to pour out liquid at the first and second cleaning portion. Thereby, the cleaning effect caused by the provision of liquid is enhanced.

According to embodiments, said liquid guiding means comprise control means for controlling the liquid flow to the cleaning portions. Said liquid guiding means may ensure a selective provision of liquid to one of said cleaning portions. For example, said control means may be arranged at a crossing point of said liquid guiding means and may be adapted to enable a provision of liquid in one branch of the liquid guiding means.

According to embodiments, said control means comprise a valve, said valve being adapted to selectively control the liquid flow towards the first or second cleaning portion. In other words, said valve is adapted to control the provision of liquid in one branch of the liquid guiding means. In addition, said valve may comprise a closed position in which the provision of liquid to each cleaning portion is prevented.

According to embodiments, said control means are included in said main body. More in detail, the housing of the valve may be formed, specifically integrally formed within the main body. Thereby an improved integration of said control means paired with reduced manufacturing costs is obtained.

According to embodiments, the main body comprises a coupling portion adapted to receive a quick coupler of a hose. Thereby, provision of liquid to said gutter cleaner is obtained with reduced installation effort.

According to embodiments, the coupling portion is fluidly coupled with liquid guiding means included in said main body. Thereby, liquid provided to the coupling portion is directly guided into said liquid guiding means.

The term "essentially" or "approximately" as used in the invention means, if not defined otherwise, deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: illustrates a lateral view of an example embodiment of a gutter cleaner with a slidably mounted cleaning tool arranged in a deactivated position;
- Fig. 2: illustrates a lateral view of an example embodiment of a gutter cleaner with a slidably mounted cleaning tool arranged in an activated position;
- Fig. 3: illustrates the usage of a first cleaning portion of the embodiment according to Fig.1 and 2 for cleaning a gutter;
- Fig. 4: illustrates the usage of a second cleaning portion of the embodiment according to Fig.1 and 2 for cleaning a gutter;
- Fig. 5: illustrates a first lateral view of an example embodiment of a gutter cleaner including liquid guiding means; and
- Fig. 6: illustrates a sectional lateral view of an example embodiment of a gutter cleaner including liquid guiding means.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

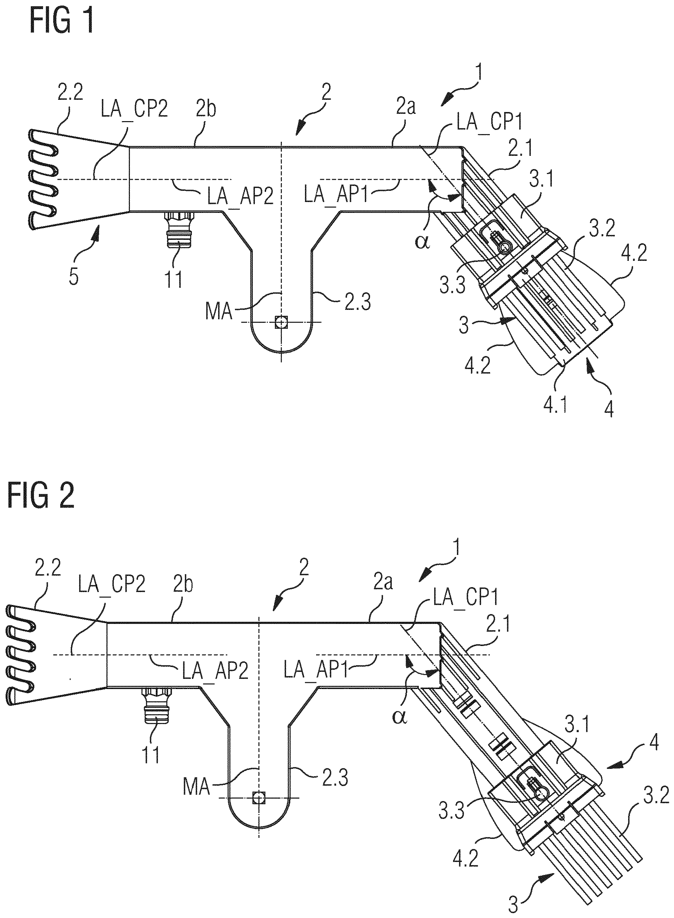

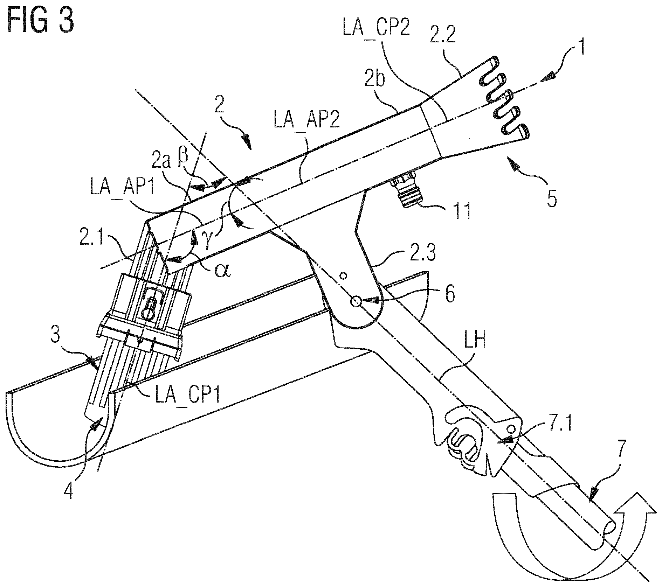

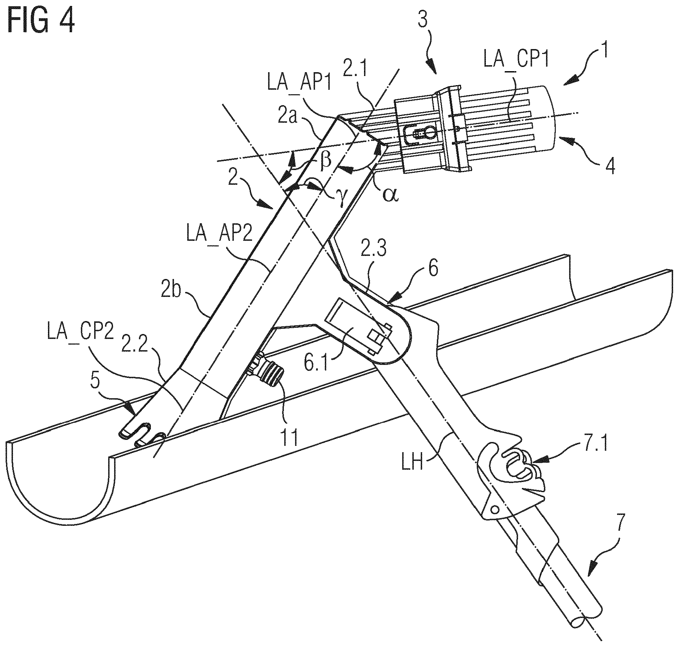

Fig. 1 and 2 illustrate an example embodiment of an apparatus 1 for cleaning gutters, in the following referred to as gutter cleaner. The gutter cleaner comprises a main body 2 and a handling portion 2.3 provided at the main body 2 for directly or indirectly attaching a handle for handling the gutter cleaner (handle not shown in Fig. 1 and 2, but in Fig. 3 and 4.

The main body 2 further comprises a first and a second arm portion 2a, 2b. Said first and second arm portions 2a, 2b laterally protrude at opposite sides of the main body 2. In other words, said first and second arm portions 2a, 2b form together with the handling portion 2.3 a T-shaped or essentially T-shaped main body 2. The first arm portion 2a comprises a longitudinal axis LA_AP1 and the second arm portion 2b comprises a longitudinal axis LA_AP2. Said longitudinal axes LA_AP1, LA_AP2 may be arranged parallel to each other. Preferably, said longitudinal axes LA_AP1, LA_AP2 may coincide and thus may form a common longitudinal axis.

The main body 2 may further comprise a middle axis MA which may form the longitudinal axis of the handling portion 2.3. Said longitudinal axes LA_AP1, LA_AP2 may be arranged vertically or essentially vertically with respect to said middle axis MA.

Said first arm portion 2a comprises a first cleaning portion 2.1 and the second arm portion 2b comprises a second cleaning portion 2.2. Said first and second cleaning portions 2.1, 2.2 protrude from their respective arm portion 2a, 2b at an outer portion of said arm portions 2a, 2b, i.e. at a portion located at a distance to said middle axis MA.

Said first cleaning portion 2.1 builds or includes a straight cleaning portion 2.1 which is arranged in an angled manner with respect to the longitudinal axis LA_AP1 of the first arm portion 2a. Said first cleaning portion 2.1 may comprise a longitudinal axis LA_CP1 which is slanted with respect to the longitudinal axis LA_AP1 of the first arm portion 2a. Said longitudinal axes LA_CP1 and LA_AP1 may span a first plane which coincides with the figure planes of Fig. 1 and 2. Said plane may also include said middle axis MA.

As mentioned before, the first cleaning portion 2.1 is slanted with respect to the first arm portion 2a. More in detail, the longitudinal axis LA_CP1 and the longitudinal axis LA_AP1 may confine an inclination angle α which opens towards the middle axis MA, respectively, the handling portion 2.3. Said inclination angle α may be in the range of 90° and 180°, preferably between 120° and 150°, more preferably in the range of 125° and 135°, specifically 130° or essentially 130°. Thereby, an improved inserting of the first cleaning portion 2.1 in the gutter is achieved.

Said first cleaning portion 2.1 comprises at least two cleaning tools, in the present embodiment a first cleaning tool 3 and a second cleaning tool 4. The first cleaning tool 3 may be, for example, a brush or a brush-like tool and the second cleaning tool 4 may be, for example, a scraper. It is worth mentioning, that said tool configuration is only an example, i.e. in other embodiments, other cleaning tool configurations can be used.

In order to be able to activate one of the cleaning tools 3, 4 and deactivate the other one, the first cleaning tool 3 is preferably moveably mounted at the first cleaning portion 2.1. By moving the first cleaning tool 3, said cleaning tool can be positioned in an active position (shown in Fig. 2) in which said first cleaning tool 3 can be used for cleaning the gutter and an idle position (shown in Fig. 1) in which said first cleaning tool 3 is deactivated.

In the present embodiment, the first cleaning tool 3 is slidably mounted at the first cleaning portion 2.1. Thereby it is possible that the first cleaning tool 3 can be slided in a forward position (active position) (shown in Fig. 2) and in a retracted position (inactive position) (shown in Fig. 1). Said first cleaning tool 3 may comprise a brush base portion 3.1 at which a plurality of bristles 3.2 are arranged. Said brush base portion 3.1 may comprise an annular shape surrounding the first cleaning portion 2.1 in a form-fit manner. In addition, the first cleaning tool 3 may comprise a locking mechanism 3.3 in order to lock the first cleaning tool 3 in the active, respectively, inactive position.

It is worth mentioning that said movability of the first cleaning tool 3 can be also achieved using other moving means, for example a first cleaning tool 3 which is screwable and guided at the first cleaning portion 2.1 or a hinged arrangement of the first cleaning tool 3 at the first cleaning portion 2.1.

As shown in Fig. 1 and 2, said first cleaning tool 3 is also moveable with respect to the second cleaning tool 4. Said second cleaning tool 4 may form the free end of the first cleaning portion 2.1. Thereby, by retracting the first cleaning tool 3 in the position according to Fig. 1, at least a portion of the second cleaning tool 4 protrudes over the first cleaning tool 3. More in detail, a free end portion of the second cleaning tool 4 may protrude over the free ends of the bristles 3.2 of the first cleaning tool 3. Thereby, the gutter can be cleaned using the second cleaning tool 4 instead of the first cleaning tool 3. On the other hand, in case that the first cleaning tool 3 is moved in a forward position, the bristles 3.2 of the first cleaning tool 3 protrude over the free end portion of the second cleaning tool 4 thereby activating the first cleaning tool 3 for cleaning the gutter.

According to an embodiment, the second cleaning tool 4 may be a scraper which comprises lips 4.1, 4.2 for cleaning the gutter. A first lip 4.1 may be arranged at the free end (lower portion) of the second cleaning tool 4. In other words, the first lip 4.1 may be arranged transversely with respect to the longitudinal axes LA_CP1. In addition, the second cleaning tool 4 may comprise further lips 4.2 arranged at lateral sides of the second cleaning tool 4, i.e. said lips 4.2 may be spaced apart from each other and may run in the direction of the longitudinal axes LA_CP1. According to embodiments, said lips 4.1, 4.2 may be flexible. Said lips 4.1, 4.2 may be made of an elastically deformable material, e.g. an elastic polymer. Alternatively or in addition, said lips 4.1, 4.2 may be made of a combination of a hard and a soft component. Preferably there is a harder or hard inner portion or inner component and a softer or soft outer portion or component. This has the advantage that the tool can be fitted to different shapes and sizes of the gutter and/or a better cleaning result can be obtained.

The first cleaning tool 3, specifically the brush head comprising the bristles 3.2 may be split in two portions, wherein said two cleaning tool or brush head portions are arranged at different sides of the second cleaning tool 4. In other words, the first cleaning tool 3 is adapted to at least partially surround the second cleaning tool 4 in the retracted (inactive) position. In yet other words, the first cleaning tool 3 may comprise an interior space in which at least a portion of the second cleaning tool 4 is received in the retracted (inactive) position.

As shown in Fig. 1 to Fig. 4, the gutter cleaner further comprises a second cleaning portion 2.2 which is arranged at the free end of the second arm portion 2b. At said second cleaning portion 2.2, at least one further cleaning tool 5 is provided. Said further cleaning tool 5 is, for example, a fork-like or rake-like cleaning tool, specifically is formed by a fork or rake. More in detail, said further cleaning tool 5 may comprise multiple teeth which are protruding at the free end of the second cleaning portion 2.2 thereby forming said further cleaning tool 5.

In order to enhance the usability of the gutter cleaner, the second cleaning portion 2.2 is oriented in a different direction and in a different plane than the first cleaning portion 2.1. According to an example, the longitudinal axis LA-CP2 of the second cleaning portion 2.2 and longitudinal axis LA-AP2 of the second arm portion 2b may coincide or may be arranged in parallel to each other. In other words, the second cleaning portion 2.2 may be attached or integrally formed at the second arm portion 2b without any tilt.

According to the invention, the longitudinal axis LA-CP2 of the second cleaning portion 2.2 and the longitudinal axis LA-AP2 of the second arm portion 2b are tilted with respect to each other. The tilt, specifically the direction of tilt of the second cleaning portion 2.2 is different to the tilt/direction of tilt of the first cleaning portion 2.1. More in detail, as mentioned before, the longitudinal axis LA_CP1 of the first cleaning portion and the longitudinal axis LA_AP1 of the first arm portion may span a first plane which coincides with the figure planes of Fig. 1 and 2. The longitudinal axis LA-CP2 of the second cleaning portion 2.2 and the longitudinal axis LA-AP2 of the second arm portion 2b may span a second plane which is different to said first plane. According to an embodiment, said first and second planes, may confine an acute angle which opens to a side opposite to the handling portion 2.3, respectively opposite to the middle axis MA.

According to embodiments, the second arm portion 2b may comprise a pair of second cleaning portions 2.2. Said second cleaning portions 2.2 may protrude at opposite sides of the second arm portion 2b. More in detail and referring to fig. 1 and 2, a first one of said second cleaning portions 2.2 may protrude upwardly out of the first plane (figure plane of fig. 1 and 2) and the second one of said second cleaning portions 2.2 may protrude downwardly out of said first plane (figure plane of fig. 1 and 2). At each second cleaning portion 2.2, a fork-like or rake-like cleaning tool may be provided. Also other tool configurations are possible, including the same cleaning tools at both second cleaning portions 2.2 or different cleaning tools at said second cleaning portions 2.2. By providing a pair of second cleaning portions 2.2 protruding at opposite sides of the second arm portion 2b, it is possible to use the cleaning tool provided at the second cleaning portion 2.2 in both directions, i.e. when moving the gutter cleaner in a forward and a backward direction.

Referring to fig. 3 and 4, the handle is preferably formed as an elongated handle. The apparatus 1 may further comprise adjusting means 6 for adjusting the angle of inclination of the main body 2, specifically the first and second arm portions 2a, 2b with respect to a handle 7 or a handle fixing portion 7.1. Said adjusting means 6 may be, for example, a hinge. Upper-mentioned handling portion 2.3 may be used for connecting the main body 2 with a handle 7 or a handle fixing portion 7.1. At said handling portion 2.3, a hinge point may be provided in order to be able to tilt the main body 2 with respect to the handle 7 or handle fixing portion 7.1. Said adjusting means 6 may be adapted to position the main body 2 with respect to the handle 7 or hanlde fixing portion 7.1 at different angles or positions.

In general, with or without such adjusting means 6, the angle β, hereinafter called first tool angle, between the longitudinal axis LA_CP1 of the first cleaning tool or the first cleaning portion 2.1 and the longitudinal axis LH of the handle 7 or handle fixing portion 7.1 is smaller than 90° and the angle γ, hereinafter called second tool angle, between the longitudinal axis LA_CP2 of the second cleaning tool or the second cleaning portion 2.2 and the longitudinal axis LH of the handle 7 or handle fixing portion 7.1 is also smaller than 90°. This is in particular achieved by setting the inclination angle of the middle axis MA with respect to the handle axis LH.

Preferably both tool angles β and γ are approximately the same, meaning between β = γ or at least β = γ ± 5 °. Also in particular the inclination angle α between the longitudinal axis LA_CP1 and the longitudinal axis LA_AP1 is at least approximately equal to the sum β + γ of the two tool angles.

Thus, in one embodiment, the handle 7 can be rotated by 180° and the inclination of the second tool towards the gutter will be at least approximately the same as of the first tool without changing the inclination of the handle 7.

In addition, said adjusting means 6 may comprise a locking mechanism 6.1, specifically a quick-locking-mechanism. Said locking mechanism 6.1 may be adapted to enable an angular adjustment of the main body 2 with respect to the handle 7 or handle fixing portion 7.1 in a released state and a fixing of a certain angular position of the main body 2 with respect to the handle 7 or handle fixing portion 7.1 in a fixed state. Thereby it is possible to adapt the apparatus 1 to specific requirements for cleaning the gutter.

The advantages of different orientation of the first and second cleaning portion 2.1, 2.2 are explained in detail based on Fig. 3 and 4. Due to the tilted arrangement of the main body 2 with respect to the handle 7 or handle fixing portion 7.1, the first cleaning portion 2.1 (comprising first and second cleaning tools 3, 4) and the second cleaning portion 2.2 (comprising said further cleaning tool 6) can be easily inserted in the gutter without changing the angular position of the main body 2 with respect to the handle 7 or handle fixing portion 7.1, respectively, without changing the spatial orientation of the handle 7. The cleaning tool can be chosen, respectively, changed by rotating (as indicated by the arrow in Fig. 3) the handle 7 around its longitudinal axis by 180° or essentially 180° thereby disengaging the first/second cleaning tool 3, 4 and using said further cleaning tool 6 for gutter cleaning.

In order to enhance the cleaning effect of the gutter cleaner, the apparatus 1 comprises liquid guiding means 10 for providing liquid towards the first or second cleaning portion 2.1, 2.2. Said liquid guiding means 10 may comprise liquid channels 10.1, 10.2 which are integrally formed in the main body 2, i.e. integrally formed within the arm portions 2a, 2b and cleaning portions 2.1, 2.2 of the main body 2. According to other embodiments, said liquid guiding means 10 are not integrally formed within the main body 2 but only arranged at said main body 2. Furthermore, a coupling portion 11 may be provided at the main body 2. Said coupling portion 11 may be adapted to receive a quick coupler of a water hose. The coupling portion 11 may be fluidly coupled with said liquid guiding means 10, specifically with said liquid channels 10.1, 10.2 in order to guide liquid provided by the water hose into said liquid channels 10.1, 10.2. So, by means of said liquid channels 10.1, 10.2, the liquid is provided to the respective cleaning portion 2.1, 2.2.

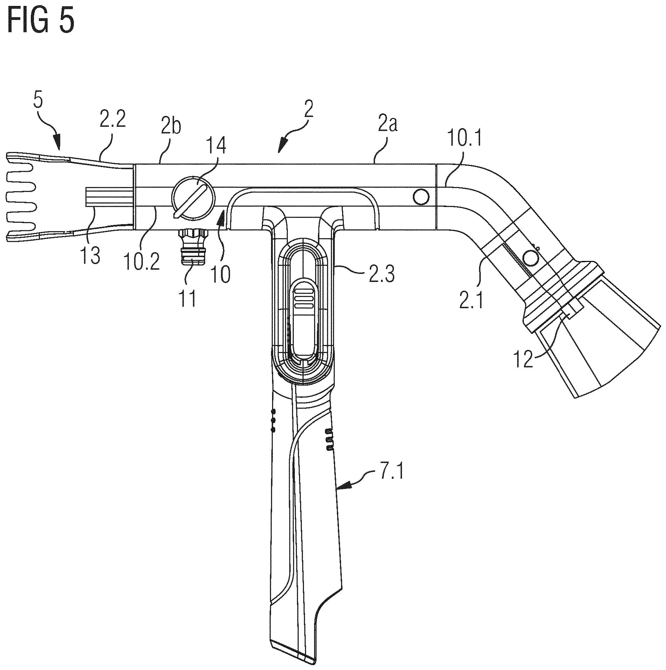

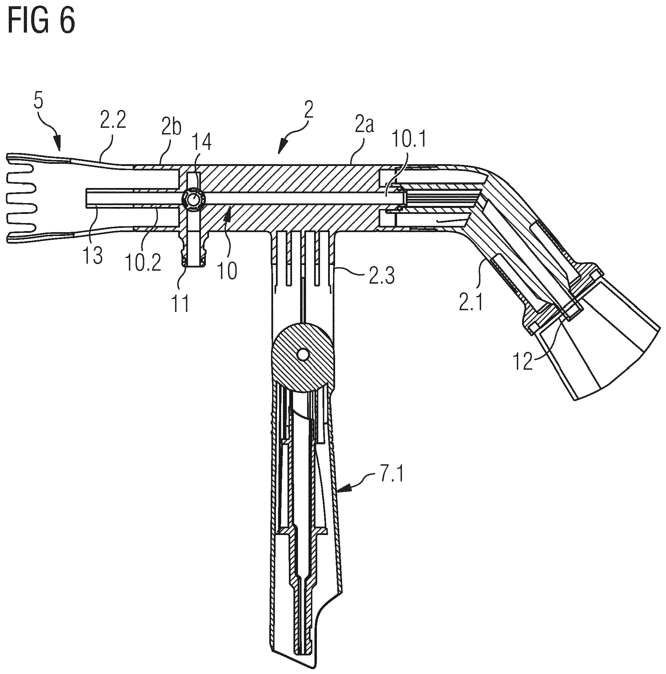

As shown in Fig. 5 and 6, a liquid nozzle 12, 13 is provided at the free end of the liquid channel 10.1, 10.2. By means of said liquid nozzles 12, 13, liquid can be poured out at the respective cleaning portion 2.1, 2.2.

In order to be able to selectively provide liquid into one of said liquid channels 10.1, 10.2, respectively, to one of said liquid nozzles 12, 13, the apparatus 1 may comprise control means 14 for selectively controlling the liquid flow to the first or second cleaning portion 2.1, 2.2. For example, said control means 14 comprises a liquid valve. Said valve may comprise a valve housing and a valve body (also referred to as plug) which is movable with respect to the valve housing. Said valve housing may be integrally formed within the main body 2. Said liquid valve may be, for example, a plug valve. Said selectively controlling of the liquid flow towards the first or second cleaning portion 2.1, 2.2 may be obtained by an appropriate positioning the valve body. For example, a rotatable control knob may be provided at the main body for controlling the liquid valve.

Said main body 2 (including the arm portions 2a, 2b, the handling portion 2.3 and at least portions of the cleaning portions 2.1, 2.2) may be manufactured by injection-moulding. Thereby, the arm portions 2a, 2b, the handling portion 2.3 and at least portions of the cleaning portions 2.1, 2.2 are integrally formed as a single piece element.

It should be noted that the description and drawings merely illustrate the principles of the proposed gutter cleaner. Those skilled in the art will be able to implement various arrangements that, although not explicitly described or shown herein, embody the principles of the invention, as defined in the appended claims.

### List of reference numerals

- 1: apparatus
- 2: main body
- 2a: first arm portion
- 2b: second arm portion
- 2.1: first cleaning portion
- 2.2: second cleaning portion
- 2.3: handling portion
- 3: first cleaning tool
- 3.1: brush base portion
- 3.2: bristles
- 3.3: locking mechanism
- 4: second cleaning tool
- 4.1: lips
- 4.2: lips
- 5: further cleaning tool
- 6: adjusting means
- 6.1: locking mechanism
- 7: handle
- 7.1: handle fixing portion

- 10: liquid guiding means
- 10.1: liquid channel
- 10.2: liquid channel
- 11: coupling portion
- 12: liquid nozzle
- 13: liquid nozzle
- 14: control means
- α, β, γ: angle
- LA_AP1: longitudinal axis (of first arm portion)
- LA_AP2: longitudinal axis (of second arm portion)
- LA_CP1: longitudinal axis (of first cleaning portion)
- LA_CP2: longitudinal axis (of second cleaning portion)
- LH: longitudinal axis (of handle or handle fixing portion)
- MA: middle axis

## Claims

1. Apparatus for cleaning gutters comprising a main body (2) with a handling portion (2.3) and two arm portions (2a, 2b) protruding from said handling portion (2.3), wherein at each arm portion (2a, 2b) at least one cleaning portion (2.1, 2.2) with at least one cleaning tool (3, 4, 5) is provided, wherein a first cleaning portion (2.1) is provided at a first arm portion (2a) in an angled manner,
wherein a second cleaning portion (2.2) is provided at a second arm portion (2b)
the apparatus further comprising a handle (7) or handle fixing portion (7.1),
and wherein:
longitudinal axes (LA_CP2, LA_AP2) of the second cleaning portion (2.2) and the second arm portion (2b) are arranged in an angled manner relative to each other, longitudinal axes (LA_CP1, LA_AP1) of the first cleaning portion (2.1) and the first arm portion (2a) are arranged in a first plane and the longitudinal axes (LA_CP2, LA_AP2) of the second cleaning portion (2.2) and the second arm portion (2b) are arranged in a second plane different to the first plane,
**characterized in that:**
the angle between the longitudinal axis (LA_AP1) of the first arm portion (2a) and the longitudinal axis of the handle (7) or handle fixing portion (7.1) is greater than 90° and the angle between the longitudinal axis of the second arm portion (2b) and the longitudinal axis of the handle (7) or handle fixing portion (7.1) is smaller than 90°;
wherein the first cleaning portion (2.1) or the first cleaning tool (3) is arranged in an angled manner under a first tool angle (β)with respect to said handle (7) or handle fixing portion (7.1) and the second cleaning portion (2.2) or the second cleaning tool (5) is arranged in an angled manner under a second tool angle (γ)with respect to said handle (7) or handle fixing portion (7.1), and
wherein the first tool angle (β) is at least approximately equal to the second tool angle (γ).

2. Apparatus according to claim 1, comprising a handle (7) or a handle fixing portion (7.1) which can be or is connected with the handling portion (2.3) of the main body (2).

3. Apparatus according to claim 2, further comprising adjusting means (6) for adjusting an inclination, in particular at least one angle of inclination (β, γ), of the main body (2), specifically the first and second arm portions (2a, 2b) or the first and second cleaning portions (2.1 and 2,.2), with respect to a longitudinal axis (LH) of the handle (7) or handle fixing portion (7.1).

4. Apparatus according to claim 3, wherein said adjusting means (6) are formed by or include a hinge and/or comprise a locking mechanism (6.1), specifically a quick-locking-mechanism, adapted to enable an angular adjustment of the main body (2) with respect to the handle (7) or handle fixing portion (7.1) in a released state and a fixing of a certain angular position of the main body (2) with respect to the handle (7) or handle fixing portion (7.1) in a fixed state.

5. Apparatus according to any of the preceding claims wherein at least one of the following conditions is fulfilled:
(i) the first cleaning portion (2.1) and the handling portion (2.3) protrude downwardly at the same side of the main body (2) ;
(ii) the first plane and the second plane confine an acute angle which preferably opens to a side opposite to the handling portion.
(iii)the longitudinal axes (LA_AP1, LA_AP2) of the first arm portion (2a) and the second arm portion (2b) coincide or are parallel to each other.

6. Apparatus according to any of the preceding claims, wherein the longitudinal axis (LA_AP1) of the first arm portion (2a) and the longitudinal axis (LA_CP1) of the first cleaning portion (2.1) confine an inclination angle (α) between 90° and 180°, preferably between 120° and 150°, wherein said inclination angle (α) preferably opens towards the handling portion (2.3) of the main body (2).

7. Apparatus according to claim 6, wherein the inclination angle (α) between the longitudinal axis (LA_AP1) of the first arm portion (2a) and the longitudinal axis (LA_CP1) of the first cleaning portion (2.1) is at least approximately equal to the sum of the first tool angle (β) and the second tool angle (γ).

8. Apparatus according to any of the preceding claims, wherein the first cleaning portion (2.1) comprises at least a first cleaning tool (3) and a second cleaning tool (4) and the first cleaning tool (3) is movably mounted at the first cleaning portion (2.1) in order to be arranged at least in a first and a second position, wherein in said first position, the first cleaning tool (3) is in an active position and in said second position, the first cleaning tool (3) is in an idle position.

9. Apparatus according to any of the preceding claims, wherein at least one of the cleaning tools is or comprises a brush or a brush-like cleaning tool, in particular to remove small particles of dirt, and at least one of the cleaning tools is or comprises a fork-like or rake-like shape in particular including multiple teeth, in particular to remove larger dirt like leafs, tree branches, moss etc.

10. Apparatus according to any of the preceding claims, wherein the main body (2) comprises liquid guiding means (10), wherein said liquid guiding means (10) are adapted to provide liquid in the area of the first and/or the second cleaning portion (2.1, 2.2).

11. Apparatus according to any of the preceding claims, wherein the main body (2) comprises a coupling portion (11) adapted to receive a quick coupler of a hose.

12. Apparatus according to claim 10 and claim 11, wherein the coupling portion (11) is fluidly coupled with liquid guiding means (10) included in said main body (2).

## Patentansprüche

1. Vorrichtung zum Reinigen von Rinnen, umfassend einen Hauptkörper (2) mit einem Handhabungsabschnitt (2.3) und zwei Armabschnitten (2a, 2b), die von dem Handhabungsabschnitt (2.3) abstehen, wobei an jedem Armabschnitt (2a, 2b) mindestens ein Reinigungsabschnitt (2.1, 2.2) mit mindestens einem Reinigungswerkzeug (3, 4, 5) vorgesehen ist, wobei ein erster Reinigungsabschnitt (2.1) an einem ersten Armabschnitt (2a) abgewinkelt vorgesehen ist wobei ein zweiter Reinigungsabschnitt (2.2) an einem zweiten Armabschnitt (2b) vorgesehen ist,
wobei die Vorrichtung ferner einen Griff (7) oder Griffbefestigungsabschnitt (7.1) aufweist,
und wobei:
Längsachsen (LA_CP2, LA_AP2) des zweiten Reinigungsabschnitts (2.2) und des zweiten Armabschnitts (2b) zueinander abgewinkelt angeordnet sind, Längsachsen (LA_CP1, LA_AP1) des ersten Reinigungsabschnitts (2.1) und des ersten Armabschnitts (2a) in einer ersten Ebene angeordnet sind und die Längsachsen (LA_CP2, LA_AP2) des zweiten Reinigungsabschnitts (2.2) und des zweiten Armabschnitts (2b) in einer von der ersten Ebene verschiedenen zweiten Ebene angeordnet sind
**dadurch gekennzeichnet, dass**:
der Winkel zwischen der Längsachse (LA_AP1) des ersten Armabschnitts (2a) und der Längsachse des Griffs (7) oder Griffbefestigungsabschnitts (7.1) größer als 90° ist und der Winkel zwischen der Längsachse des zweiten Armabschnitts (2b) und der Längsachse des Griffs (7) oder Griffbefestigungsabschnitts (7.1) kleiner als 90° ist;
wobei der erste Reinigungsabschnitt (2.1) oder das erste Reinigungswerkzeug (3) unter einem ersten Werkzeugwinkel (β) in Bezug auf den Griff (7) oder den Griffbefestigungsabschnitt (7.1) abgewinkelt angeordnet ist und der zweite Reinigungsabschnitt (2.2) oder das zweite Reinigungswerkzeug (5) in Bezug auf den Griff (7) oder den Griffbefestigungsabschnitt (7.1) unter einem zweiten Werkzeugwinkel (γ) abgewinkelt angeordnet ist, und
wobei der erste Werkzeugwinkel (β) zumindest annähernd gleich dem zweiten Werkzeugwinkel (γ) ist.

2. Vorrichtung nach Anspruch 1, umfassend einen Griff (7) oder einen Griffbefestigungsabschnitt (7.1), der mit dem Handhabungsabschnitt (2.3) des Hauptkörpers (2) verbunden werden kann oder verbunden ist.

3. Vorrichtung nach Anspruch 2, ferner umfassend ein Einstellmittel (6) zum Verstellen einer Neigung, insbesondere mindestens eines Neigungswinkels (β, γ), des Hauptkörpers (2), insbesondere des ersten und zweiten Armabschnitts (2a, 2b) oder des ersten und zweiten Reinigungsabschnitts (2.1 und 2,.2), in Bezug auf eine Längsachse (LH) des Griffs (7) oder Griffbefestigungsabschnitts (7.1).

4. Vorrichtung nach Anspruch 3, wobei die Einstellmittel (6) durch ein Scharnier gebildet sind oder ein Scharnier enthalten und/oder einen Verriegelungsmechanismus (6.1), insbesondere einen Schnellverriegelungsmechanismus, umfassen, der geeignet ist, eine Winkeleinstellung des Hauptkörpers (2) in Bezug auf den Griff (7) oder den Griffbefestigungsabschnitt (7.1) in einem gelösten Zustand und eine Fixierung einer bestimmten Winkelposition des Hauptkörpers (2) in Bezug auf den Griff (7) oder den Griffbefestigungsabschnitt (7.1) in einem fixierten Zustand zu ermöglichen.

5. Vorrichtung nach einem der vorhergehenden Ansprüche, wobei mindestens eine der folgenden Bedingungen erfüllt ist:
(i) der erste Reinigungsabschnitt (2.1) und der Handhabungsabschnitt (2.3) ragen auf der gleichen Seite des Hauptkörpers (2) nach unten;
(ii) die erste Ebene und die zweite Ebene begrenzen einen spitzen Winkel, der sich vorzugsweise zu einer dem Handhabungsabschnitt gegenüberliegenden Seite öffnet.
(iii) die Längsachsen (LA_AP1, LA_AP2) des ersten Armabschnitts (2a) und des zweiten Armabschnitts (2b) überschneiden sich oder sind parallel zueinander.

6. Vorrichtung nach einem der vorhergehenden Ansprüche, wobei die Längsachse (LA_AP1) des ersten Armabschnitts (2a) und die Längsachse (LA_CP1) des ersten Reinigungsabschnitts (2.1) einen Neigungswinkel (α) zwischen 90° und 180°, vorzugsweise zwischen 120° und 150°, einschließen, wobei sich der Neigungswinkel (α) vorzugsweise zum Handhabungsabschnitt (2.3) des Hauptkörpers (2) hin öffnet.

7. Vorrichtung nach Anspruch 6, wobei der Neigungswinkel (α) zwischen der Längsachse (LA_AP1) des ersten Armabschnitts (2a) und der Längsachse (LA_CP1) des ersten Reinigungsabschnitts (2.1) zumindest annähernd gleich der Summe aus dem ersten Werkzeugwinkel (β) und dem zweiten Werkzeugwinkel (γ) ist.

8. Vorrichtung nach einem der vorhergehenden Ansprüche, wobei der erste Reinigungsabschnitt (2.1) mindestens ein erstes Reinigungswerkzeug (3) und ein zweites Reinigungswerkzeug (4) umfasst und das erste Reinigungswerkzeug (3) beweglich an dem ersten Reinigungsabschnitt (2.1) angebracht ist, um mindestens in einer ersten und einer zweiten Position angeordnet zu werden, wobei sich das erste Reinigungswerkzeug (3) in der ersten Position in einer aktiven Position befindet und sich das erste Reinigungswerkzeug (3) in der zweiten Position in einer Ruheposition befindet.

9. Vorrichtung nach einem der vorhergehenden Ansprüche, wobei mindestens eines der Reinigungswerkzeuge eine Bürste oder ein bürstenartiges Reinigungswerkzeug ist oder umfasst, insbesondere zum Entfernen kleiner Schmutzpartikel, und mindestens eines der Reinigungswerkzeuge eine gabel- oder rechenartige Form, insbesondere mit mehreren Zähnen, ist oder umfasst, insbesondere zum Entfernen von größerem Schmutz wie Blättern, Ästen, Moos usw.

10. Vorrichtung nach einem der vorhergehenden Ansprüche, wobei der Hauptkörper (2) ein Flüssigkeitsleitmittel (10) umfasst, wobei das Flüssigkeitsleitmittel (10) ausgebildet ist, um Flüssigkeit im Bereich des ersten und/oder des zweiten Reinigungsabschnitts (2.1, 2.2) bereitzustellen.

11. Vorrichtung nach einem der vorhergehenden Ansprüche, wobei der Hauptkörper (2) einen Verbindungsabschnitt (11) umfasst, der zur Aufnahme einer Schnellverbindung eines Schlauches geeignet ist.

12. Vorrichtung nach Anspruch 10 und Anspruch 11, wobei der Verbindungsabschnitt (11) fluidisch mit einem Flüssigkeitsleitmittel (10) verbunden ist, das in dem Hauptkörper (2) enthalten ist.

## Revendications

1. Appareil pour nettoyer des gouttières comprenant un corps principal (2) avec une portion de manipulation (2.3) et deux portions de bras (2a, 2b) faisant saillie de ladite portion de manipulation (2.3), dans lequel en correspondance de chaque portion de bras (2a, 2b) au moins une portion de nettoyage (2.1, 2.2) avec au moins un outil de nettoyage (3, 4, 5) est fournie, dans lequel une première portion de nettoyage (2.1) est fournie en correspondance d'une première portion de bras (2a) de manière inclinée,
dans lequel une deuxième portion de nettoyage (2.2) est fournie en correspondance d'une deuxième portion de bras (2b)
l'appareil comprenant en outre un manche (7) ou une portion de fixation de manche (7.1), et dans lequel :
des axes longitudinaux (LA_CP2, LA_AP2) de la deuxième portion de nettoyage (2.2) et de la deuxième portion de bras (2b) sont disposés de manière inclinée l'un par rapport à l'autre, des axes longitudinaux (LA_CP1, LA_AP1) de la première portion de nettoyage (2.1) et de la première portion de bras (2a) sont disposés dans un premier plan et les axes longitudinaux (LA_CP2, LA_AP2) de la deuxième portion de nettoyage (2.2) et de la deuxième portion de bras (2b) sont disposés dans un deuxième plan différent du premier plan,
**caractérisé en ce que** :
l'angle entre l'axe longitudinal (LA_AP1) de la première portion de bras (2a) et l'axe longitudinal du manche (7) ou de la portion de fixation de manche (7.1) est supérieur à 90° et l'angle entre l'axe longitudinal de la deuxième portion de bras (2b) et l'axe longitudinal du manche (7) ou de la portion de fixation de manche (7.1) est inférieur à 90°;
dans lequel la première portion de nettoyage (2.1) ou le premier outil de nettoyage (3) est disposée de manière inclinée selon un premier angle d'outil (β) par rapport audit manche (7) ou portion de fixation de manche (7.1) et la deuxième portion de nettoyage (2.2) ou le deuxième outil de nettoyage (5) est disposée de manière inclinée selon un deuxième angle d'outil (γ) par rapport audit manche (7) ou portion de fixation de manche (7.1), et
dans lequel le premier angle d'outil (β) est au moins approximativement égal au deuxième angle d'outil (γ).

2. Appareil selon la revendication 1, comprenant un manche (7) ou une portion de fixation de manche (7.1) qui peut être ou est connecté avec la portion de manipulation (2.3) du corps principal (2).

3. Appareil selon la revendication 2, comprenant en outre des moyens d'ajustement (6) pour ajuster une inclinaison, en particulier au moins un angle d'inclinaison (β, γ), du corps principal (2), spécifiquement les première et deuxième portions de bras (2a, 2b) ou les première et deuxième portions de nettoyage (2.1, 2.2), par rapport à un axe longitudinal (LH) du manche (7) ou de la portion de fixation de manche (7.1).

4. Appareil selon la revendication 3, dans lequel lesdits moyens d'ajustement (6) sont formés de ou incluent une charnière et/ou comprennent un mécanisme de verrouillage (6.1), spécifiquement un mécanisme de verrouillage rapide, apte à permettre un ajustement angulaire du corps principal (2) par rapport au manche(7) ou à la portion de fixation de manche (7.1) dans un état dégagé et une fixation d'une certaine position angulaire du corps principal (2) par rapport au manche (7) ou à la portion de fixation de manche (7.1) dans un état fixe.

5. Appareil selon l'une quelconque des revendications précédentes dans lequel au moins une des conditions suivantes est remplie :
(i) la première portion de nettoyage (2.1) et la portion de manipulation (2.3) font saillie vers le bas du même côté du corps principal (2) ;
(ii) le premier plan et le deuxième plan confinent un angle aigu qui s'ouvre de préférence sur un côté opposé à la portion de manipulation.
(i) les axes longitudinaux (LA_AP1, LA_AP2) de la première portion de bras (2a) et de la deuxième portion de bras (2b) coïncident ou sont parallèles l'un à l'autre.

6. Appareil selon l'une quelconque des revendications précédentes, dans lequel l'axe longitudinal (LA_AP1) de la première portion de bras (2a) et l'axe longitudinal (LA_CP1) de la première portion de nettoyage (2.1) confinent un angle d'inclinaison (α) entre 90° et 180°, de préférence entre 120° et 150°, dans lequel ledit angle d'inclinaison (α) s'ouvre de préférence vers la portion de manipulation (2.3) du corps principal (2).

7. Appareil selon la revendication 6, dans lequel l'angle d'inclinaison (α) entre l'axe longitudinal (LA_AP1) de la première portion de bras (2a) et l'axe longitudinal (LA_CP1) de la première portion de nettoyage (2.1) est au moins approximativement égal à la somme du premier angle d'outil (β) et du deuxième angle d'outil (γ).

8. Appareil selon l'une quelconque des revendications précédentes, dans lequel la première portion de nettoyage (2.1) comprend au moins un premier outil de nettoyage (3) et un deuxième outil de nettoyage (4) et le premier outil de nettoyage (3) est monté de manière mobile en correspondance de la première portion de nettoyage (2.1) de façon à être disposé au moins dans une première et une deuxième position, dans lequel dans ladite première position, le premier outil de nettoyage (3) est dans une position active et dans ladite deuxième position, le premier outil de nettoyage (3) est dans une position de repos.

9. Appareil selon l'une quelconque des revendications précédentes, dans lequel au moins un des outils de nettoyage est ou comprend une brosse ou un outil de nettoyage semblable à une brosse, en particulier pour enlever des petites particules de saleté, et au moins un des outils de nettoyage a ou comprend une forme de fourche ou de râteau incluant notamment de multiples dents, en particulier pour enlever de plus grandes saletés telles que des feuilles, des branches d'arbre, de la mousse, etc.

10. Appareil selon l'une quelconque des revendications précédentes, dans lequel le corps principal (2) comprend des moyens de guidage de liquide (10), dans lequel lesdits moyens de guidage de liquide (10) sont aptes à fournir du liquide dans la zone de la première et/ou de la deuxième portion de nettoyage (2.1, 2.2).

11. Appareil selon l'une quelconque des revendications précédentes, dans lequel le corps principal (2) comprend une portion de couplage (11) apte à recevoir un raccord rapide d'un tuyau.

12. Appareil selon la revendication 10 et la revendication 11, dans lequel la portion de couplage (11) est couplée de manière fluidique à des moyens de guidage de liquide (10) inclus dans ledit corps principal (2).
